**Europäisches Patentamt**

**European Patent Office**

**Office européen des brevets**

(19)

(11) Veröffentlichungsnummer: **0 105 394**
**B1**

(12)

# EUROPÄISCHE PATENTSCHRIFT

(45) Veröffentlichungstag der Patentschrift:
**25.06.86**

(51) Int. Cl.⁴: **A 23 G 3/20,** A 23 G 3/26

(21) Anmeldenummer: **83109231.7**

(22) Anmeldetag: **17.09.83**

(54) Gesteuertes und geregeltes Verfahren zum vollautomatischen, kontinuierlichen Dragieren.

(30) Priorität: **30.09.82 DE 3236192**

(43) Veröffentlichungstag der Anmeldung:
**18.04.84 Patentblatt 84/16**

(45) Bekanntmachung des Hinweises auf die Patenterteilung:
**25.06.86 Patentblatt 86/26**

(84) Benannte Vertragsstaaten:
**AT BE CH DE FR GB IT LI LU NL SE**

(56) Entgegenhaltungen:
**EP - A - 0 030 153**
**DE - A - 1 441 370**
**DE - A - 1 617 578**
**DE - A - 1 960 416**
**DE - A - 2 016 906**
**FR - A - 2 278 316**
**FR - A - 2 374 968**
**GB - A - 937 070**
**US - A - 4 133 290**

(73) Patentinhaber: **Dr. Karl Thomae GmbH, Postfach 1755,
D-7950 Biberach (Riss) (DE)**

(72) Erfinder: **Schepky, Gottfried, Dr.,
Ulrich-von-Hutten-Weg 2, D-7950 Biberach 1 (DE)**

ACTORUM AG

## Beschreibung

Die Erfindung betrifft ein gesteuertes und geregeltes Verfahren zum vollautomatischen, kontinuierlichen Dragieren von festen Zubereitungen.

Das Überziehen von Tabletten, Pellets, Granulaten, Kristallen, Kapseln, Zäpfchen, Bonbons in Dragiergeräten ist seit langem bekannt. Es wird mit unterschiedlichsten Dragiermedien durchgeführt. Der Vorgang des Überziehens lässt sich in allen Fällen in folgende Teilvorgänge untergliedern: Auftragung des Dragiermediums auf das Dragiergut, Verteilen des Dragiermediums auf dem Dragiergut und Trocknen des Dragiergutes. Laufen diese Teilvorgänge nacheinander ab und dies in mehreren Wiederholungen, so spricht man von einer diskontinuierlichen Dragierung. Laufen sie jedoch gleichzeitig ab, dann handelt es sich um eine kontinuierliche Dragierung.

Während die noch immer häufige Zuckerdragierung vorwiegend diskontinuierlich erfolgt, werden Filmüberzüge häufig kontinuierlich dragiert. Solch ein kontinuierliches Dragierverfahren wird z. B. in der Deutschen Patentschrift 1492029 beschrieben.

Schon seit einer Reihe von Jahren sind automatische Dragierverfahren bekannt. Sie beziehen sich ausschliesslich auf die diskontinuierliche Dragierung und lassen sich grundsätzlich in verschiedene Prinzipien gliedern:

1. Steuerung über Zeitschaltuhren, denen die Zeitabschnitte nach den Erfahrungen der Handdragierung vorgegeben sind. Das Programm läuft dann ohne ungewollte Veränderung bis zum ebenfalls programmierbaren Abschluss.

2. Steuerung durch Bestimmung des Trocknungszustandes der Dragéehüllen über die Messung der Luftfeuchte im Kessel oder im Abluftrohr oder der Gutsfeuchte selbst.

3. Steuerung durch Messung der Temperatur mit Hilfe von Temperaturfühlern. Hierbei wird die Temperaturerniedrigung gegenüber einem Normalwert bestimmt und zur Steuerung ausgenutzt. Die Temperaturerniedrigung ist solange messbar, wie Lösungsmittel aus der aufgetragenen Dragierschicht verdunstet. Ist die Schicht trocken, steigt die Temperatur auf den oben erwähnten Normalwert, wodurch ein neuer Befeuchtungsvorgang ausgelöst werden kann.

4. Auch eine Kombination von Feuchtigkeitsmessung und indirekter Feuchtebestimmung durch Temperaturmessung wird zur Steuerung der automatischen Dragierung verwendet. In der letzten Zeit haben sich diese Verfahren stark durchgesetzt, da sie die Eigenschaft der Kerne, deren Form und Oberfläche und den Zustand der Dragées im Kessel, deren Trocknungsgrad und deren Schichtdicke berücksichtigen. Auch äussere Faktoren (Raumtemperatur, Luftfeuchte) können in den Steuerungsprozess einbezogen werden. All das ist bei der zeitgesteuerten Dragierung nicht möglich (vgl. H. Moldenhauer et al., Pharmazie 1971, 677).

5. Steuerung der jeweiligen Zugabemenge an Dragiermedium durch vorausgegangene automatische Gewichtsbestimmung einzelner Individuen des Dragiergutes.

Ein recht verfeinertes automatisches Verfahren auf Basis Steuerung über Zeitvorgabe wird bereits von Lachmann und Cooper [J. Pharm. Sci. 52, 490 (1963)] beschrieben. Jeder Einzelschritt des Dragierzyklus kann individuell über einen Lochstreifen gesteuert werden.

Die Steuerung der Dragierzyklusdauer über die Bestimmung der relativen Luftfeuchte im Dragierkessel wird durch die Deutsche Auslegeschrift 1617578 beschrieben. Zu gleichem Zweck berichtete Heyd über eine auf Hochfrequenz basierende Messung der absoluten Gutsfeuchte im Dragiergerät [vgl. A. Heyd, Drug Development Communications 1(2), 133–142 (1974–1975)].

Die kontinuierliche Temperaturmessung im Gut zur Feststellung des Endpunktes eines Dragierzyklusses und zur Impulsgabe eines neuen wird durch die DE-A-1960416 sowie das Belgische Patent Nr. 831441 offenbart.

Die Benutzung der Temperatur und/oder Feuchtigkeit der Dragiertrommelatmosphäre bzw. der Differenz von Zu- und Abluftfeuchte bzw. -temperatur als Steuergrösse ist in der DE-A 2016906 zur Steuerung der einzelnen Dragierzyklen vorgeschlagen worden.

Wie bereits gesagt, beziehen sich alle vorgenannten Verfahren zur automatischen Dragierung auf die diskontinuierliche Dragierung. Sie greifen nicht in den jeweils laufenden Dragierzyklus ein, sondern ziehen aus ihm höchstens korrigierende Steuerimpulse für den nachfolgenden Zyklus.

Während eines Dragierzyklusses treten mehr oder weniger grosse Gutstemperaturschwankungen auf, bedingt durch die jeweilige momentane Bilanz aus Verdunstungskälte und zugeführter bzw. im Gut vorhandener Wärmeenergie. Parallel dazu schwankt die Feuchte entsprechend an der Gutsoberfläche. Um diese unterschiedlichen Zustände an der Gutsoberfläche im Laufe eines Dragierzyklusses und die damit zusammenhängenden Beeinträchtigungen der Qualität der Überzüge zu vermeiden, wurde häufig versucht, soweit es das Dragiermedium zuliess, das diskontinuierliche Verfahren auf eine kontinuierliche Dragierung umzustellen. Dadurch liess sich ausserdem die Dragierzeit oftmals deutlich verringern. Sofern bei dieser kontinuierlichen Dragierung die Gutstemperatur und/oder die direkt oder indirekt gemessene Gutsfeuchte überhaupt registriert wurde, dienten diese Messungen jedoch keiner Regelung des Dragierprozesses. Durch diese Unterlassung mussten unterschiedliche Gutstemperaturen bzw. Gutsfeuchten im Laufe der Dragierung und damit wiederum einhergehende Beeinträchtigungen der Überzugsprodukte in Kauf genommen werden.

Zu schwankenden Gutstemperaturen und damit zusammenhängenden schwankenden Gutsfeuchten kommt es bei der kontinuierlichen Dragierung, z. B. wenn einzelne Arbeitsbedingungen nicht konstant gehalten werden. In Frage kommen hierbei die Zuluftmenge, die Zulufttemperatur, die Abluftmenge, die Dragiergut-Ausgangsqualität und vor allem die Zuluftfeuchte. Weitere Parameter, welche die Gleichmässigkeit von Gutstemperatur und -feuchte beeinträchtigen können, sind Veränderungen der Zugabe an Dragierflüssigkeit, z.B. bedingt durch ein allmähliches Verstopfen der Aufsprühdüse.

Vor allem bei Filmüberzügen, welche den Hauptanteil bei der kontinuierlichen Dragierung darstellen, wirken sich Schwankungen in der Gutstemperatur und -feuchte oftmals sehr negativ aus. Haben sie nämlich erst einmal zu Ungleichmässigkeiten im Überzug geführt, so lassen sich diese Ungleichmässigkeiten im weiteren Dragierverlauf nicht mehr oder nur sehr schwer ausgleichen. Neben optischen Beanstandungen können solche Ungleichmässigkeiten bei Diffusionsüberzügen oder magensaftresistenten Überzügen zu mehr oder weniger starken Beeinträchtigungen der Wirkstoffverfügbarkeit führen. Bei feuchteempfindlichem Dragiergut können die beschriebenen Feuchte- und Temperaturschwankungen im Laufe der kontinuierlichen Dragierung zu irreparablen Veränderungen des Produktes führen, sei es, dass es zu physikalischen Veränderungen durch eingedrungene Feuchte mit daraus resultierenden Zerfallsveränderungen oder Aufplatzen kommt, sei es, dass durch Feuchteeinschluss eine latente Zersetzungsneigung verstärkt wird.

Erfindungsgemäss werden die beschriebenen Schwankungen von Temperatur und Feuchte in der Gutsoberfläche und die damit verbundenen negativen Auswirkungen dadurch unterbunden, dass im Rahmen eines Verfahrens zum gesteuerten und geregelten, vollautomatischen und kontinuierlichen Aufbringen von Überzügen auf Formlingen die Oberflächentemperatur und/oder die Oberflächenfeuchte des im Dragiergerät befindlichen Dragiergutes und/oder die relative Feuchte der Abluft und/oder die Temperatur der Abluft mit einer geeigneten Messvorrichtung gemessen werden, die Messdaten einem Regler zugeführt werden, der sie mit vorgegebenen Solldaten vergleicht und der bei Abweichungen von den Sollwerten die Stellgrössen Zugabemenge des Dragiermediums und/oder Zuluftmenge und/oder Zulufttemperatur einzeln oder in Kombination miteinander solange variiert, bis der Sollwert der Temperatur der Gutsoberfläche bzw. der Feuchte der Gutsoberfläche bzw. der Sollwert der relativen Feuchte der Abluft bzw. der Temperatur der Abluft erreicht wird.

Besonders vorteilhaft ist es, wenn die Temperatur der Gutsoberfläche bzw. die Feuchte der Gutsoberfläche auf einem vorgewählten Soll-Wert gehalten wird. Dies geschieht mit Hilfe einer Regelung. Die Regelgrössen sind die Temperatur der Gutsoberfläche und/oder Feuchte der Gutsoberfläche und/oder die Abluftfeuchte und/oder die Ablufttemperatur. Weicht nun der Ist-Wert vom Soll-Wert ab, dann verändert ein Regler die betreffende bzw. betreffenden Stellgrössen solange, bis die beiden Werte wieder übereinstimmen. Als Stellgrössen kommen einzeln oder in Kombination miteinander in Frage:

a) die Zugabegeschwindigkeit des Dragiermediums

b) die Zuluftmenge

c) die Zulufttemperatur,

wobei im allgemeinen den Stellgrössen a) und b) aus Gründen der Einfachheit der Vorzug zu geben ist, da die Zulufttemperatur nur mit Hilfe aufwendiger Mischapparate ausreichend rasch verändert werden kann.

Durch die erfindungsgemässe Konstanthaltung von Gutsoberflächentemperatur und Gutsoberflächenfeuchte kann auf aufwendige Verfahren, um die Dragierbedingungen, wie Zuluftfeuchte, konstant zu halten, verzichtet werden. Ebenso macht das erfindungsgemässe Arbeiten von der jeweiligen Saugfähigkeit des Dragierausgangsmaterials, der Ansatzgrösse, der Art des Dragiergerätes und der Art der Auftragsvorrichtung weitgehend unabhängig, da das erfindungsgemässe Verfahren nicht starr nach vorgegebenen Daten arbeitet, sondern sich laufend dem Dragiergut und Dragierprozess anpasst. Selbst ein Betriebsunfall, wie das Abspringen oder Platzen eines Schlauches mit Dragiermedium, müssen nicht mehr wie bisher zur Vernichtung des ganzen Ansatzes führen, wenn beim Überschreiten von Grenzwerten der betreffenden Regelgrösse Alarm ausgelöst und/oder bestimmte Teilvorgänge der Dragierung, wie z.B. die Zudosierung der Dragierflüssigkeit oder der Zuluft, automatisch abgeschaltet werden. Für das erfindungsgemässe Verfahren lassen sich Dragierkessel aller Formen mit und ohne Perforation verwenden.

Auch bei Dragiervorrichtungen, welche mit einer Luftzuführung in das rollierende Dragiergut arbeiten, lässt sich das erfindungsgemässe Verfahren mit Erfolg anwenden. Selbst in einem Vakuumdragiergerät kann das Verfahren Anwendung finden; allerdings beschränkt es sich dann auf die Stellgrösse «Zugabe des Dragiermediums».

Die Dragierflüssigkeit lässt sich mittels Mehrstoff- und Einstoffdüsen oder Zulaufsystemen auf das Dragiergut auftragen.

Einen weiteren Vorteil bietet die erfindungsgemässe automatische Dragierung dem Entwickler, indem er nicht mehr wie bisher eine aus den gegebenen Einstellungsparametern beim Dragieren resultierende Gutstemperatur und Gutsfeuchte lediglich zur Kenntnis nehmen muss, sondern diese selbst auf gewünschte Werte einstellen kann. Dadurch kann er einmal die für sein Produkt günstigen Bedingungen frei wählen und zum anderen sein Verfahren validieren, das heisst, die jeweiligen Grenzen des Verfahrens abstecken, innerhalb derer ein gewünschtes Produkt erzielt werden kann.

Die gemessenen Werte an Zuluftmenge, Temperatur der Zuluft, Feuchte der Zuluft, Ablufttemperatur, Abluftfeuchte, Abluftmenge, Feuchte der Gutsoberfläche und Zugabemenge des Dragiermediums können nach an sich üblichen Methoden zur Dokumentation und Auswertung gespeichert werden, beispielsweise indem die elektrischen Signale einem elektronischen Speicher eingegeben werden oder auf einem Mehrhandschreiber mitgeschrieben werden.

Einige Beispiele sollen die Arbeitsweise der erfindungsgemässen automatischen Dragierung erläutern:

Beispiel 1

2 kg Tabletten (11 mm Durchmesser und 10 mm Wölbungsradius) werden in einem zwiebelförmigen Dragierkessel von 550 mm Durchmesser unter folgenden Bedingungen kontinuierlich mit einer 10%igen wässrigen Hydroxypropylmethylcellulose-Lösung überzogen:
Zuluftmenge: 120 m$^3$/Stunde
Zulufttemperatur: 80°C
Abluftmenge: 290 m$^3$/Stunde
Aufgabe der Dragierlösung erfolgt per 2-Stoffdüse, die Messung der Gutstemperatur mit PT 100-Fühler.
Kesselgeschwindigkeiten: beim Temperieren (ohne Sprühen): 1,8 U/min bis 39°C Gutstemperatur, anschliessendes Sprühen bei 5 U/min, bis Kerne abgedeckt sind (=10 min lang). Weiteres Sprühen bei 20 U/min. Geregelt wird die Gutstemperatur (= Regelgrösse) auf einen Sollwert von 40 ± 1°C über die Stellgrösse der Dragierlösungszugabe. Diese Stellgrösse arbeitet über die Variation der Drehzahl der Förderpumpe, einer Schlauchpumpe, welche einer 2-Stoffdüse vorgeschaltet ist. Sobald die im Kessel gemessene Temperatur sich im vorgegebenen Sollwertbereich etwas nach unten bewegt, verlangsamt der Regler die Drehzahl der Förderpumpe der Dragierflüssigkeit. Damit sinkt die Verdunstungsenergie ab, die Zuluftenergie gewinnt die Oberhand, und als Bilanz steigt die Temperatur des Dragiergutes an. Der umgekehrte Regelvorgang erfolgt, wenn die Gutstemperatur sich auf die obere Grenze des Sollwertbereichs hin bewegt.
Benötigte Sprühzeit für 0,4 kg 10%ige wässrige Hydroxypropylmethylcellulose-Lösung: 20 min.
Aufgetragener Lack: 1,94 mg/cm$^2$.
Maximale Istwertschwankungen der Gutstemperatur während des Sprühvorganges: 40 ± 0,5°C.
Die Zuluftmenge, ebenso die Abluftmenge wurden mit Hilfe je eines Flügelradanemometers kontinuierlich gemessen und über ein Ventil gestellt.
Die Messung der Zulufttemperatur erfolgt über ein Widerstandsthermometer, die Temperatureinstellung über einen Leistungsteller, der mit dem elektrischen Heizregister verbunden ist. Die stufenlose Einstellung der jeweiligen Kesselgeschwindigkeit wird durch einen vom Regler angesteuerten Frequenzumwandler erreicht. Zur Auftragung der Lacklösung wurde eine 2-Stoffdüse mit 1,2 mm Rundstrahldüse und 2,0 mm Luftkopföffnung bei einem Luftdruck von 1,5 bar verwendet. Die der Sprühpistole vorgeschaltete Schlauchpumpe ist über einen Tyristor stufenlos regelbar.

Beispiel 2

Wie Beispiel 1, jedoch bei konstanter Zugabe der Dragierlösung mit 20 g/min und der Stellgrösse Zuluftmenge.

Sobald sich die im Kessel gemessene Gutstemperatur im vorgegebenen Sollwertsbereich etwas nach unten bewegt, erhöht der Regler die Zuluftmenge. Nähert sich dagegen die Gutstemperatur der oberen Grenze des Sollwertbereichs, dann verringert der Regler die Zuluftmenge.
Benötigte Sprühzeit für 0,4 kg 10%ige wässrige Hydroxypropylmethylcellulose: 19 min.
Max. Istwertschwankungen der Gutstemperatur während des Sprühvorganges: 40 ± 0,5°C.

Beispiel 3

Wie Beispiel 1, jedoch bei konstanter Zugabe der Dragierlösung mit 20 g/min und der Stellgrösse Zulufttemperatur.
Sobald sich die im Kessel gemessene Gutstemperatur im vorgegebenen Sollwertbereich etwas nach unten bewegt, erhöht der Regler die Zulufttemperatur. Nähert sich die Gutstemperatur dagegen der oberen Grenze des Sollwertbereichs, dann drosselt der Regler die Zulufttemperatur.
Benötigte Sprühzeit für 0,4 kg 10%ige wässrige Hydroxypropylmethylcellulose-Lösung: 22 min.
Max. Istwertschwankungen der Gutstemperatur: 40 ± 2°C.

Beispiel 4

2 kg Tabletten (7 mm Durchmesser und 6 mm Wölbungsradius) werden in einem zwiebelförmigen Dragierkessel von 550 mm Durchmesser unter folgenden Bedingungen kontinuierlich mit einer 9%igen (Gew./Gew.) Celluloseacetatphthalat-Lösung in Aceton-Isopropanol-Wasser (18:27:40 Gew.-Teile) überzogen:
Zulufttemperatur: 80°C;
Zuluftmenge: 120 m$^3$/Stunde;
Abluftmenge: 290 m$^3$/Stunde;
Kesseldrehzahlen wie in Beispiel 1.
Regelgrösse: Gutstemperatur, gemessen mit PT-100-Fühler;
Sollwert: 40 ± 1°C;
Stellgrösse: Lackförderpumpe, die einer 2-Stoffdüse vorgeschaltet ist;
Benötigte Sprühzeit: 70 min für 1 kg Lacklösung;
Aufgetragener Lack: 4,8 mg/cm$^2$;
Max. Istwertschwankungen der Dragiergutstemperatur: 40 ± 0,5°C.

Beispiel 5

2 kg Tabletten (10 mm Durchmesser und 7,5 mm Wölbungsradius) werden in einem zwiebelförmigen Dragierkessel von 550 mm Durchmesser unter folgenden Bedingungen kontinuierlich mit einer Zuckerdragier-Suspension folgender Zusammensetzung überzogen:

| Gummi arabicum | 50,0 g |
|---|---|
| Polyvinylpyrrolidon 25 000 | 10,0 g |
| Saccharose | 310,0 g |
| Polyethylenglykol 6000 | 20,0 g |
| Titandioxid | 40,0 g |
| Talkum | 360,0 g |
| Wasser | 527,0 g |

Zulufttemperatur: 60°C;
Abluftmenge: 290 m³/Stunde.

Aufgabe der Dragierlösung per 2-Stoffdüse. Messung der Gutstemperatur mit PT-100-Fühler.

Kesselgeschwindigkeiten: Temperieren (ohne Sprühen): 1,8 U/min bis 44°C Gutstemperatur, anschliessendes Sprühen bei 5 U/min bis Kerne abgedeckt sind (= 1 min lang). Weiteres Sprühen bei 20 U/min.

Geregelt wird die Gutstemperatur (= Regelgrösse) auf einen Sollwert von 45 ± 1°C über die Stellgrössen Dragiersuspensionszugabe sowie Zuluftmenge. Diese Stellgrössen arbeiten über die Variation der Drehzahl der Förderpumpe, einer Schlauchpumpe, welche einer 2-Stoffdüse vorgeschaltet ist bzw. über die Variation der Zuluftmenge. Sobald die im Kessel gemessene Temperatur sich im vorgegebenen Sollbereich etwas nach unten bewegt, verlangsamt der Regler die Drehzahl der Förderpumpe der Dragierflüssigkeit und erhöht die Zuluftmenge. Damit sinkt die Verdunstungsenergie ab, die Zuluftenergie gewinnt die Oberhand und als Bilanz steigt die Temperatur des Dragiergutes an. Der umgekehrte Regelvorgang erfolgt, wenn die Gutstemperatur sich auf die obere Grenze des Sollwertbereichs hin bewegt.

Benötigte Sprühzeit für 0,34 kg Zuckerdragier-Suspension: 39 min.

Aufgetragener Feststoffanteil: 4,81 mg/cm².

Max. Istwertschwankung der Gutstemperatur während des Sprühvorganges: 45 ± 0,2°C.

Beispiel 6

6 kg Tabletten (6 mm Durchmesser und 15 mm Wölbungsradius) werden in einem Gerät mit perforiertem Kessel (Driacoater Typ 500) unter folgenden Bedingungen kontinuierlich mit einer 10%igen wässrigen Hydroxypropylmethylcellulose-Lösung überzogen:

Zuluftmenge: 300 m³/Stunde
Zulufttemperatur: 80°C.

Aufgabe der Dragierlösung per 2-Stoffdüse, Messung der Gutstemperatur mit PT-100-Fühler.

Kesselgeschwindigkeiten: Temperieren (ohne Sprühen): 1,8 U/min bis 39°C Gutstemperatur, anschliessendes Sprühen bei 5 U/min bis Kerne abgedeckt sind (= 10 min lang). Weiteres Sprühen bei 20 U/min.

Geregelt wid die Gutstemperatur (= Regelgrösse) auf einen Sollwert von 40 ± 1°C über die Stellgrösse der Dragierlösungszugabe. Diese Stellgrösse arbeitet über die Variation der Drehzahl der Förderpumpe, einer Schlauchpumpe, welche einer 2-Stoffdüse vorgeschaltet ist.

Benötigte Sprühzeit für 1,2 kg 10%ige wässrige Hydroxypropylmethylcellulose-Lösung: 12 min.

Aufgetragener Lack: 1,96 mg/cm².

Max. Istwertschwankungen der Gutstemperatur während des Sprühvorganges 40 ± 1°C.

Beispiel 7

2 kg Tabletten (11 mm Durchmesser und 10 mm Wölbungsradius) werden in einem zwiebelförmigen Dragierkessel von 550 mm Durchmesser unter folgenden Bedingungen kontinuierlich mit einer 10%igen wässrigen Hydroxypropylmethylcellulose-Lösung überzogen:

Abluftmenge: 290 m³/Stunde.

Aufgabe der Dragierlösung per 2-Stoffdüse. Messung der Gutstemperatur mit PT-100-Fühler.

Kesselgeschwindigkeiten: Temperieren (ohne Sprühen): 1,8 U/min bis 39°C Gutstemperatur, anschliessendes Sprühen bei 5 U/min bis Kerne abgedeckt sind (= 10 min lang). Weiteres Sprühen bei 20 U/min.

Geregelt wird die Gutstemperatur (= Regelgrösse) auf einen Sollwert von 40 ± 1°C über die Stellgrössen Dragierlösungszugabe sowie Zuluftmenge sowie Zulufttemperatur. Diese Stellgrössen arbeiten über die Variation der Drehzahl der Förderpumpe, einer Schlauchpumpe, welche einer 2-Stoffdüse vorgeschaltet ist, über die Variation der Zuluftmenge sowie ihrer Temperatur. Sobald die im Kessel gemessene Temperatur sich im vorgegebenen Sollwertbereich etwas nach unten bewegt, verlangsamt der Regler die Drehzahl der Förderpumpe der Dragierflüssigkeit, erhöht die Zuluftmenge sowie deren Temperatur. Damit sinkt die Verdunstungsenergie ab, die Zuluftenergie gewinnt die Oberhand und als Bilanz steigt die Temperatur des Dragiergutes an. Der umgekehrte Regelvorgang erfolgt, wenn die Gutstemperatur sich auf die obere Grenze des Sollwertbereichs hin bewegt.

Benötigte Sprühzeit für 0,4 kg 10%ige wässrige Hydroxypropylmethylcellulose-Lösung: 21 min.

Aufgetragener Lack: 1,94 mg/cm².

Max. Istwertschwankungen der Gutstemperatur während des Sprühvorganges 40 ± 0,5°C.

Beispiel 8

40 kg Tabletten (8 mm Durchmesser und 7 mm Wölbungsradius) werden in einem zwiebelförmigen Dragierkessel von 900 mm Durchmesser unter folgenden Bedingungen kontinuierlich mit einer Lacklösung folgender Zusammensetzung überzogen:

| | |
|---|---|
| Hydroxypropylmethylcellulose-phthalat 50 (Shinetsu/Japan) | 1000 g |
| Dibutylphthalat | 100 g |
| Methylenchlorid | 2500 g |
| Äthanol | 6400 g |

Zuluftmenge: 290 m³/Stunde;
Zulufttemperatur: 50°C;
Abluftmenge: 300 m³/Stunde.

Aufgabe der Dragierlösung per 2-Stoffdüse. Messung der Gutstemperatur mit PT-100-Fühler.

Kesselgeschwindigkeiten: Temperieren (ohne Sprühen): 1,8 U/min bis 31°C Gutstemperatur, anschliessendes Sprühen bei 5 U/min bis Kerne abgedeckt sind (= 10 min lang). Weiteres Sprühen bei 20 U/min.

Geregelt wird die Gutstemperatur (= Regelgrösse) auf einen Sollwert von 32 ± 1°C über die Stellgrösse der Dragierlösungszugabe. Die Stellgrösse arbeitet über die Variation der Drehzahl der Förderpumpe, einer Schlauchpumpe, welche einer 2-Stoffdüse vorgeschaltet ist.

Benötigte Sprühzeit für 20,2 kg Lacklösung: 5 Stunden.

Max. Istwertschwankung der Gutstemperatur während des Sprühvorganges: 32 ± 0,5°C.

Aufgetragene Feststoffmenge: 6 mg/cm$^2$.

Wie bereits auf Seite 6 beschrieben, eignet sich das erfindungsgemässe Verfahren auch zur allgemeinen Überwachung eines Dragieransatzes. Die Beispiele 9 und 10 erläutern dies:

Beispiel 9

Durchführung des Dragierverfahrens wie bei Beispiel 8.

Der Dragierautomat ist jedoch zusätzlich mit zwei elektrischen Grenzkontakten versehen, deren Ansprechwerte frei wählbar sind und die durch Erreichen des Sollwertbereiches der Gutstemperatur ansprechbar werden. Der eine Kontakt wird vor Dragierbeginn auf 34°C, der andere auf 30°C eingestellt. Gelangt nun während des Dragierprozesses, etwa durch Abspringen eines Zuführungsschlauches innerhalb des Kessels plötzlich eine zu grosse Menge an Dragierflüssigkeit in den Kessel, so sinkt die Gutstemperatur unter 30°C ab und der untere Grenzkontakt spricht an. Er löst ein Warnsignal und/oder, je nach Vorwahl, ein sofortiges Abschalten der Pumpe aus. Der Kessel läuft noch einige Zeit weiter, um ein irreversibles Verkleben des Dragiergutes zu verhindern. Dann stellt die Anlage automatisch ganz ab.

Gelangt etwa durch ein Unterbrechen der Zuführung, wie z.B. Abspringen eines Schlauches ausserhalb des Dragierkessels, Verstopfen der Düse oder Leerlaufen des Vorratsbehälters keine Dragierflüssigkeit mehr auf das Dragiergut, dann steigt die Gutstemperatur an. Bei Erreichen des oberen Grenzkontaktes von 34°C spricht dieser an, löst ein Warnsignal aus und/oder, je nach Vorwahl, stellt die Pumpe ab und stellt den Kessel für die Dauer einer Nachtrocknungsphase zur Verhinderung des Staubiglaufens auf langsame Drehzahl. Nach einer vorgewählten Trocknungszeit schaltet die Anlage ganz ab.

Beispiel 10

Durchführung des Dragierverfahrens wie bei Beispiel 8, jedoch erfolgt die Aufgabe der Dragierlösung über 2 von der Pumpe gespeiste 2-Stoffdüsen, die hintereinander und im rechten Winkel zur Fliessrichtung des Dragiergutes angeordnet sind. Die Messung der Gutstemperatur erfolgt über 2 Temperaturmessfühler, die parallel zu den Düsen ins Gut tauchen. Als Regelgrösse für den erfindungsgemäss arbeitenden Dragierautomaten dient der Mittelwert aus beiden Messkühlern. Der Automat ist zusätzlich mit 2 frei vorwählbaren Grenzkontakten versehen, die nach Erreichen des Sollwertbereiches der Gutstemperatur ansprechbar werden. Der eine Grenzkontakt wird auf 31°C, der andere auf 33°C eingestellt. Verstopft nun eine der beiden Düsen, so reagiert der Automat mit einer Erhöhung der Pumpendrehzahl, was zu einem verstärkten Austrag der zweiten Düse führt.

Dadurch kann der Durchschnittswert der Gutstemperatur zwar gehalten werden, der der zweiten Düse benachbarte Temperaturmessfühler zeigt jedoch niedrigere, der der ersten Düse benachbarte Messfühler höhere Werte an. Bei Erreichen des einen und/oder des anderen vorgewählten Grenzkontaktwertes an den Temperaturmessfühlern wird ein Warnsignal ausgelöst.

**Patentansprüche**

1. Verfahren zum gesteuerten und geregelten, vollautomatischen, kontinuierlichen Aufbringen von Überzügen auf Formlinge, dadurch gekennzeichnet, dass die Oberflächentemperatur und/oder die Oberflächenfeuchte des im Dragiergerät befindlichen Dragiergutes und/oder die relative Feuchte der Abluft und/oder die Temperatur der Abluft mit Messvorrichtungen gemessen werden, die Messwerte einem Regler zugeführt werden, der sie mit vorgegebenen Sollwerten vergleicht und bei Abweichungen von den Sollwerten die Stellgrössen Zugabemenge des Dragiermediums und/oder Zuluftmenge und/oder Zulufttemperatur einzeln oder in Kombination miteinander solange variiert, bis der Sollwert der Temperatur der Gutsoberfläche bzw. der Feuchte der Gutsoberfläche bzw. der Sollwert der relativen Feuchte der Abluft bzw. der Temperatur der Abluft erreicht wird.

2. Verfahren nach Anspruch 1, dadurch gekennzeichnet, dass die Oberflächentemperatur im Dragiergut mit Hilfe einer geeigneten Messvorrichtung gemessen wird, die Messwerte mit dem Sollwert verglichen werden und bei Abweichungen vom Sollwert die Zugabemenge des Dragiermediums solange variiert wird, bis die Temperatur der Gutsoberfläche den Sollwert wieder erreicht hat.

3. Verfahren nach Anspruch 1, dadurch gekennzeichnet, dass die Dragiergut-Oberflächen-Temperatur mit Hilfe eines oder mehrerer geeigneter Temperatur-Messfühler im Gut gemessen wird, die Messwerte bzw. deren Durchschnittswert mit dem Sollwert verglichen werden und beim Überschreiten des Sollwertes die Menge der Zuluft solange variiert wird, bis die Temperatur der Gutsoberfläche den Sollwert wieder erreicht hat.

4. Verfahren nach Anspruch 1, dadurch gekennzeichnet, dass die Dragiergut-Oberflächen-Temperatur mit Hilfe einer geeigneten Messvorrichtung gemessen wird, die Messwerte mit dem Sollwert verglichen werden und bei Abweichung vom Sollwert die Zugabemenge des Dragiermediums und der Zuluftmenge solange variiert werden, bis die Temperatur der Gutsoberfläche den Sollwert erreicht hat.

5. Verfahren nach Anspruch 1, dadurch gekennzeichnet, dass die Dragiergut-Oberflächen-Temperatur mit Hilfe einer geeigneten Messvorrichtung gemessen wird, die Messwerte mit dem Sollwert verglichen werden und bei Abweichung vom Sollwert die Zulufttemperatur solange variiert wird, bis die Temperatur der Gutsoberfläche den Sollwert wieder erreicht hat.

6. Verfahren nach Anspruch 1, dadurch gekennzeichnet, dass die Dragiergut-Oberflächen-Temperatur mit Hilfe einer geeigneten Messvorrichtung gemessen wird, die Messwerte mit dem Sollwert verglichen werden und bei Abweichen vom Sollwert die Zugabemenge des Dragiermediums und/oder der Zuluft und/oder die Zulufttemperatur solange variiert werden, bis die Temperatur der Gutsoberfläche den Sollwert wieder erreicht hat.

7. Verfahren nach Anspruch 1, dadurch gekennzeichnet, dass die Oberflächenfeuchte des Dragiergutes mit Hilfe einer Messvorrichtung gemessen wird, die Messwerte mit den Sollwerten verglichen werden, und bei Überschreiten der Sollwerte die Zugabemenge des Dragiermediums und/oder die Zuluftmenge und/oder die Zulufttemperatur solange variiert werden, bis die Oberflächenfeuchte des Dragiergutes den Sollwert wieder erreicht hat.

8. Verfahren nach Anspruch 1, dadurch gekennzeichnet, dass die relative Feuchte der Abluft gemessen wird, die Messwerte mit dem Sollwert verglichen werden und bei Abweichungen vom Sollwert die Zugabemenge des Dragiermediums und/oder die Zuluftmenge und/oder die Zulufttemperatur solange variiert werden, bis die relative Feuchte der Abluft den Sollwert wieder erreicht hat.

9. Verfahren nach Anspruch 1, dadurch gekennzeichnet, dass die Temperatur der Abluft gemessen wird, die Messwerte mit dem Sollwert verglichen werden und bei Abweichungen vom Sollwert die Zugabemenge des Dragiermediums und/oder der Zuluftmenge und/oder die Zulufttemperatur solange variiert werden, bis die Temperatur der Abluft den Sollwert wieder erreicht hat.

10. Dragierverfahren nach Anspruch 1 bis 9, dadurch gekennzeichnet, dass als Dragiermedien wässrige Zubereitungen, organische Zubereitungen, organisch-wässrige Zubereitungen, Lacklösungen bzw. -suspensionen verwendet werden.

11. Verfahren nach einem der Ansprüche 1 bis 10, dadurch gekennzeichnet, dass bei Erreichung vorgewählter Grenzwerte der geregelten Grössen Warnsignale und/oder Umschalt- und/oder Abschaltvorgänge automatisch ausgelöst werden.

## Claims

1. Process for continuously applying coatings to blanks in a controlled and regulated and fully automatic manner, characterised in that the surface temperature and/or the surface humidity of the material to be coated, which is in the coating apparatus, and/or the relative humidity of the exhaust air and/or the temperature of the exhaust air are measured with measuring means, the measurements obtained are fed into a control apparatus which compares them with given desired values and, in the event of deviations from these desired values, varies the regulated quantities of the amount of coating medium added and/or the quantity of air supplied and/or the temperature of the air supplied, either individually or in combination with one another, until the desired value is obtained for the temperature of the surface of the material or the humidity of the surface of the material or the relative humidity of the exhaust air or the temperature of the exhaust air.

2. Process as claimed in claim 1, characterised in that the surface temperature in the material which is to be coated is measured by means of a suitable measuring device, the measurements are compared with the desired value and in the event of any deviation from the desired value the quantity of coating medium added is varied until the temperature of the surface of the material to be coated has returned to the desired value.

3. Process as claimed in claim 1, characterised in that the surface temperature of the material to be coated is measured by means of one or more suitable temperature measuring sensors in the material, the measurements or the average thereof is or are compared with the desired value and, if they exceed the desired value, the quantity of air fed in is varied until the temperature of the surface of the material has returned to the desired value.

4. Process as claimed in claim 1, characterised in that the surface temperature of the material to be coated is measured with the aid of a suitable measuring device, the measurements are compared with the desired value and, if they deviate from the desired value, the quantity of coating medium fed in and the quantity of air fed in are varied until the temperature of the surface of the material has reached the desired value.

5. Process as claimed in claim 1, characterised in that the surface temperature of the material to be coated is measured by means of a suitable measuring device, the measurements are compared with the desired value and, if they deviate from the desired value, the temperature of the air fed in is varied until the temperature of the surface of the material has returned to the desired value.

6. Process as claimed in claim 1, characterised in that the surface temperature of the material to be coated is measured by means of a suitable measuring device, the measurements are compared with the desired value and, if they deviate from the desired value, the quantity of coating medium added and/or the quantity of air fed in and/or the temperature of the air fed in are varied until the temperature of the surface of the material has returned to the desired value.

7. Process as claimed in claim 1, characterised in that the surface humidity of the material to be coated is measured with the aid of a measuring device, the measurements are compared with the desired values and if they exceed the desired values the quantity of coating medium added and/or the quantity of air fed in and/or the temperature of the air fed in are varied until the surface humidity of the material to be coated has returned to the desired value.

8. Process as claimed in claim 1, characterised in that the relative humidity of the exhaust air is measured, the measurements are compared with the desired value and, if they deviate from the desired value, the quantity of coating medium added and/or the quantity of air fed in and/or the temperature of the air fed in are varied until the relative humidity of the exhaust air has returned to the desired value.

9. Process as claimed in claim 1, characterised in that the temperature of the exhaust air is measured, the measurements are compared with the desired value and, if they deviate from the desired value, the quantity of coating medium added and/or the quantity of air fed in and/or the temperature of the air fed in are varied until the temperature of the exhaust air has returned to the desired value.

**Revendications**

10. Coating process as claimed in claims 1 to 9, characterised in that aqueous preparations, organic preparations, organic-aqueous preparations, lacquer solutions or suspensions are used as coating media.

11. Process as claimed in one of claims 1 to 10, characterised in that warning signals and/or switch-over and/or switch-off procedures are automatically triggered when preselected thresholds are reached in the quantities regulated.

1. Procédé pour l'application contrôlée et régulée, entièrement automatique, continue d'enrobages sur des agglomérés ou «ébauches», caractérisé en ce que la température de surface et/ou l'humidité de surface du produit de dragéification se trouvant dans l'appareil de dragéification et/ou l'humidité relative de l'air évacué et/ou la température de l'air évacué sont mesurées à l'aide de dispositifs de mesure, les valeurs mesurées sont introduites dans un régulateur, qui les compare avec des valeurs nominales préétablies et, en cas d'écarts par rapport aux valeurs nominales, on fait varier isolément ou en combinaison entre elles les valeurs réglantes, volume d'addition de l'agent de dragéification et/ou volume d'air d'amenée et/ou température d'air d'amenée, jusqu'à ce que la valeur nominale de la température de surface du produit ou de l'humidité de surface du produit ou la valeur nominale de l'humidité relative de l'air évacué ou de la température de l'air évacué soit atteinte.

2. Procédé selon la revendication 1, caractérisé en ce que la température de surface dans le produit de dragéification est mesurée à l'aide d'un dispositif de mesure approprié, les valeurs mesurées sont comparées avec la valeur nominale et, en cas d'écarts par rapport à la valeur nominale, on fait varier le volume d'addition de l'agent de dragéification jusqu'à ce que la température de surface du produit ait atteint de nouveau la valeur nominale.

3. Procédé selon la revendication 1, caractérisé en ce que la température de surface du produit de dragéification est mesurée à l'aide d'une ou de plusieurs sondes de mesure de température appropriées dans le produit, les valeurs mesurées ou leur valeur moyenne sont comparées avec la valeur nominale et, en cas de dépassement de la valeur nominale, on fait varier le volume d'air d'amenée jusqu'à ce que la température de surface du produit ait atteint de nouveau la valeur nominale.

4. Procédé selon la revendication 1, caractérisé en ce que la température de surface du produit de dragéification est mesurée à l'aide d'un dispositif de mesure approprié, les valeurs mesurées sont comparées avec la valeur nominale et, en cas d'écart par rapport à la valeur nominale, on fait varier la quantité d'addition de l'agent de dragéification et le volume d'air d'amenée jusqu'à ce que la température de surface du produit ait atteint la valeur nominale.

5. Procédé selon la revendication 1, caractérisé en ce que la température de surface du produit de dragéification est mesurée à l'aide d'un dispositif de mesure approprié, les valeurs mesurées sont comparées avec la valeur nominale et, en cas d'écart par rapport à la valeur nominale, on fait varier la température d'amenée d'air jusqu'à ce que la température de surface du produit ait atteint de nouveau la valeur nominale.

6. Procédé selon la revendication 1, caractérisé en ce que la température de surface du produit de dragéification est mesurée à l'aide d'un dispositif de mesure approprié, les valeurs mesurées sont comparées avec la valeur nominale et, en cas d'écart par rapport à la valeur nominale, on fait varier la quantité d'addition de l'agent de dragéification et/ou de l'air d'amenée et/ou la température de l'air d'amenée jusqu'à ce que la température de surface du produit ait atteint de nouveau la valeur nominale.

7. Procédé selon la revendication 1, caractérisé en ce que l'humidité de surface du produit de dragéification est mesurée à l'aide d'un dispositif de mesure, les valeurs mesurées sont comparées avec les valeurs nominales et, en cas de dépassement des valeurs nominales, on fait varier la quantité d'addition de l'agent de dragéification et/ou le volume d'air d'amenée et/ou la température de l'air d'amenée jusqu'à ce que l'humidité de surface du produit de dragéification ait atteint de nouveau la valeur nominale.

8. Procédé selon la revendication 1, caractérisé en ce que l'humidité relative de l'air évacué est mesurée, les valeurs mesurées sont comparées avec la valeur nominale et, en cas d'écarts par rapport à la valeur nominale, on fait varier la quantité d'addition de l'agent de dragéification et/ou le volume d'air d'amenée et/ou la température de l'air d'amenée jusqu'à ce que l'humidité relative de l'air d'évacuation ait atteint de nouveau la valeur nominale.

9. Procédé selon la revendication 1, caractérisé en ce que la température de l'air d'évacuation est mesurée, les valeurs mesurées sont comparées avec la valeur nominale et, en cas d'écarts par rapport à la valeur nominale, on fait varier la quantité d'addition de l'agent de dragéification et/ou le volume de l'air d'amenée et/ou la température d'air d'amenée jusqu'à ce que la température de l'air d'évacuation ait atteint de nouveau la valeur nominale.

10. Procédé de dragéification selon les revendications 1 à 9, caractérisé en ce qu'en tant qu'agents de dragéification on utilise des préparations aqueuses, des préparations organiques, des préparations organiques-aqueuses, des solutions ou suspensions de vernis.

11. Procédé selon l'une des revendications 1 à 10, caractérisé en ce que, lorsque les valeurs limites présélectionnées des variables régulées sont atteintes, des signaux d'alarme et/ou des opérations de commutation et/ou de mise hors circuit sont déclenchés automatiquement.